**Europäisches Patentamt**

**European Patent Office**

**Office européen des brevets**

(19)

(11) Veröffentlichungsnummer : **0 342 406 B1**

(12) # EUROPÄISCHE PATENTSCHRIFT

(45) Veröffentlichungstag der Patentschrift :
**10.07.91 Patentblatt 91/28**

(51) Int. Cl.$^5$ : **F16B 19/08**

(21) Anmeldenummer : **89107661.4**

(22) Anmeldetag : **27.04.89**

(54) **Blindeinnietmutter.**

(30) Priorität : **17.05.88 DE 8806441 U**

(43) Veröffentlichungstag der Anmeldung :
**23.11.89 Patentblatt 89/47**

(45) Bekanntmachung des Hinweises auf die
Patenterteilung :
**10.07.91 Patentblatt 91/28**

(84) Benannte Vertragsstaaten :
**DE FR GB IT**

(56) Entgegenhaltungen :
**DE-A- 3 035 867**
**DE-A- 3 623 123**

(73) Patentinhaber : **HERBERT SCHRUFF GMBH**
**Industriegebiet**
**W-5508 Hermeskeil (DE)**

(72) Erfinder : **Schruff, Herbert**
**Tannenweg 8**
**W-5500 Trier (DE)**

(74) Vertreter : **Blumbach Weser Bergen Kramer**
**Zwirner Hoffmann Patentanwälte**
**Sonnenberger Strasse 100**
**W-6200 Wiesbaden 1 (DE)**

EP 0 342 406 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Blindeinnietmutter mit einem Hohlschaft, der auf der vom Setzkopf abgewandten Seite mit einem Innengewinde für den Zugdorn eines Blindnietsetzwerkzeuges versehen ist.

Derartige Blindeinnietmuttern werden mit einem offenen oder geschlossenen Schaftende hergestellt. Eine geschlossene Ausführung einer Blindeinnietmutter ist wesentlich teurer, da neben dem teureren Sackloch-Gewinde die Ausführung auch eine größere Länge aufweisen muß, die dadurch bedingt ist, daß neben dem erforderlichen Boden, Raum für die Bohrerspitze, den Anschnitt, sowie eine gewisse Produktionssicherheit vorzusehen ist. Werden längere Stellschrauben in das Schaftgewinde eingeschraubt, kann sich die erforderliche Länge weiter erhöhen. Andererseits kann auf das geschlossene Schaftende nicht verzichtet werden, wenn beispielsweise das Innenteil des Werkstückes ausgeschäumt wird über feuerfesten Türen, Kühlschränken oder dergleichen. Ist das Schaftende nicht verschlossen, so gelangen beim Ausschäumen des Werkstückes Fremdstoffe in das Gewinde.

Der Erfindung liegt daher die Aufgabe zugrunde, eine kostengünstige, vereinfachte Blindnietmutter verfügbar zu machen, die in wenig aufwendiger und kostengünstiger Weise hergestellt werden kann und einen Einsatz in den Fällen ermöglicht, wo teure Blindeinnietmuttern mit geschlossener Ausführung zur Anwendung kommen und sich der Einsatz offener Blindeinnietmuttern verbietet.

Die Erfindung besteht darin, daß bei einer Blindeinnietmutter der eingangs erwähnten Art der Hohlschaft an dem Ende, das dem Setzkopf gegenüberliegt, mit einem aus seiner verschließenden Lage entfernbaren Verschlußelement versehen ist.

In einer zweckmäßigen Ausführungsform besteht das Verschlußelement aus einem in das Hohlschaftende eingeklemmten Verschlußkörper.

In vorteilhafter Weise schließt das Verschlußelement den Hohlschaft gegenüber dem Innengewinde luftdicht ab.

Eine vorteilhafte Ausführungsform der Erfindung besteht darin, daß der Verschlußkörper aus einer Kugel besteht.

In einer Weiterbildung schlägt die Erfindung vor, daß der Verschlußkörper in einer gewindefreien Aufbohrung am Hohlschaftende sitzt.

Das Verschlußelement kann auch aus einem dünnen, verformbaren oder durchstoßbaren Verschlußkörper bei einem dünnen Blech oder einer Kunststoff-Folie bestehen.

In einer Abwandlung kann vorgesehen sein, daß das Verschlußelement aus einem herausschraubbaren Gewindeteil besteht.

Die Erfindung soll nachstehend anhand eines Ausführungsbeispieles unter Bezugnahme auf die beigefügten Zeichnungen näher erläutert werden.

In den Zeichnungen zeigen :

Fig. 1    eine erfindungsgemäße Blindeinnietmutter,
Fig. 2    eine Blindeinnietmutter nach Fig. 1 mit einem eingesetzten Verschlußkörper und
Fig. 3    eine Ausführungsform der erfindungsgemäßen Blindeinnietmutter im eingebauten Zustand mit herausbewegtem Verschlußkörper.

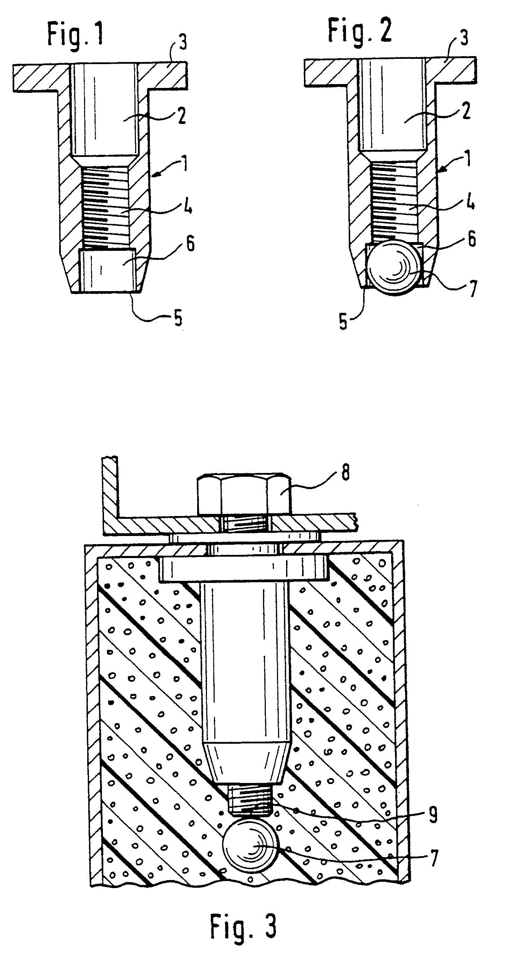

In Fig. 1 ist eine Blindeinnietmutter 1 dargestellt, die mittig von einem Hohlschaft 2 durchzogen wird. An der dem Setzkopf 3 gegenüberliegenden Seite des Hohlschaftes 2 ist dieser mit einem Innengewinde 4 versehen, in das der Zugdorn eines nicht dargestellten Werkzeugs eingeschraubt werden kann. Das dem Setzkopf 3 gegenüberliegende Ende des Hohlschaftes 2 weist eine gewindefreie Aufbohrung 6 auf.

Wie Fig. 2 zeigt, ist in die gewindefreie Aufbohrung 6 ein Verschlußkörper in Form einer Kugel 7 eingepreßt.

Wird eine derartige Blindeinnietmutter gesetzt und das Werkstück nachfolgend ausgeschäumt, wie es Fig. 3 darstellt, so können Fremdstoffe nicht in das Gewinde gelangen. Eine nach dem Aushärten der Verschäumung eingeführte Schraube 8 stößt mit ihrem vorderen Gewindeteil 9 den Verschlußkörper 7 heraus, wie es im einzelnen in Fig. 3 dargestellt ist. Auf diese Weise ist es möglich, Schrauben 8 mit beliebiger Schraubenlänge zu verarbeiten, ohne daß die Blindeinnietmutter 1 entsprechend lang ausgestaltet werden muß. Der Verschlußkörper 7 kann auch eine andere Gestalt aufweisen, und in entsprechender Anpassung kann auch die gewindefreie Ausnehmung 6 am Ende 5 des Schaftes 2 ausgestaltet sein.

Auch ist es möglich, als Verschlußelement statt einer Kugel 7 einen dünnen, verformbaren oder durchstoßbaren Verschlußkörper zu verwenden, beispielsweise in Form eines dünnen Bleches oder einer Kunststoff-Folie, die dann von dem vorderen Gewindeteil 9 einer Schraube 8 durchstoßen werden kann.

Es ist auch denkbar, daß das Verschlußelement aus einem Gewindeteil besteht, das von einer entsprechend eingeführten Schraube 8 herausbewegbar ist.

2

Die Erfindung macht in jedem Fall eine Blindeinnietmutter verfügbar, die die Vorteile einer offenen Ausführungsform besitzt und den Einsatz in Anwendungsfällen erlaubt, bei denen nur Blindeinnietmuttern mit geschlossenem Schaft zur Anwendung kommen können.

## Ansprüche

1. Blindeinnietmutter mit einem Hohlschaft, der auf der vom Setzkopf abgewandten Seite mit einem Innengewinde für den Zugdorn eines Blindnietsetzwerkzeuges versehen ist, dadurch gekennzeichnet, daß der Hohlschaft (2) an dem Ende, das dem Setzkopf (3) gegenüber liegt, mit einem aus seiner verschließenden Lage entfernbaren Verschlußelement (7) versehen ist.

2. Blindeinnietmutter nach Anspruch 1, dadurch gekennzeichnet, daß das Verschlußelement aus einem in das Hohlschaftende (5) eingeklemmten Verschlußkörper (7) besteht.

3. Blindeinnietmutter nach Anspruch 2, dadurch gekennzeichnet, daß das Verschlußelement den Hohlschaft (2) luftdicht gegenüber dem Innengewinde (4) abschließt.

4. Blindeinnietmutter nach Anspruch 2 oder 3, dadurch gekennzeichnet, daß der Verschlußkörper aus einer Kugel (7) besteht.

5. Blindeinnietmutter nach einem der Ansprüche 2 bis 4, dadurch gekennzeichnet, daß der Verschlußkörper in einer gewindefreien Ausnehmung (6) am Hohlschaftende (5) sitzt.

6. Blindeinnietmutter nach einem der Ansprüche 1 bis 3, dadurch gekennzeichnet, daß das Verschlußelement (7) am Hohlschaftende (5) aus einem dünnen, verformbaren oder durchstoßbaren Verschlußkörper besteht.

7. Blindeinnietmutter nach Anspruch 6, dadurch gekennzeichnet, daß das Verschlußelement (7) ein dünnes Blech ist.

8. Blindeinnietmutter nach Anspruch 6, dadurch gekennzeichnet, daß das Verschlußelement aus einer Kunststoff-Folie besteht.

9. Blindeinnietmutter nach Anspruch 1, dadurch gekennzeichnet, daß das Verschlußelement (7) aus einem herausschraubbaren Gewindeteil besteht.

## Revendications

1. Ecrou à river aveugle ayant un axe creux qui sur le côté opposé à la tête de pose est pourvu d'un filetage interne destiné au mandrin de traction d'un outil de pose d'écrous à river aveugles, caractérisé en ce que l'axe creux (2) est pourvu, à son extrémité opposée à la tête de pose (3), d'un élément obturateur (7) pouvant être écarté de sa position d'obturation.

2. Ecrou à river aveugle selon la revendication 1, caractérisé en ce que l'élément obturateur est constitué par un corps obturateur (7) coincé dans l'extrémité (5) de l'axe creux.

3. Ecrou à river aveugle suivant la revendication 2, caractérisé en ce que l'élément obturateur ferme de façon étanche à l'air l'axe creux (2) en face du filetage interne (4).

4. Ecrou à river aveugle suivant l'une quelconque des revendications 2 ou 3, caractérisé en ce que le corps obturateur est constitué par une bille (7).

5. Ecrou à river aveugle suivant l'une quelconque des revendications 2 à 4, caractérisé en ce que le corps obturateur est disposé dans un dégagement (6) non fileté à l'extrémité (5) de l'axe creux.

6. Ecrou à river aveugle suivant l'une quelconque des revendications 1 à 3, caractérisé en ce que l'élément obturateur (7) est constitué à l'extrémité (5) de l'axe creux, d'un corps obturateur mince, déformable ou transperçable.

7. Ecrou à river aveugle suivant la revendication 6, caractérisé en ce que l'élément obturateur (7) est une tôle mince.

8. Ecrou à river aveugle suivant la revendication 6, caractérisé en ce que l'élément obturateur est constitué par un film en matière plastique.

9. Ecrou à river aveugle suivant la revendication 1, caractérisé en ce que l'élément obturateur (7) est constitué par une pièce filetée dévissable.

## Claims

1. A blind-riveted nut having a hollow stem having, on the side remote from the snap head, an internal screwthread for the pull rod of a tool for setting blind rivets, characterised in that the hollow stem (2) has, at its end remote from the snap head (3), a closure element (7) movable any from its closing position.

2. A nut according to claim 1, characterised in that the closure element is in the form of a closure member (7) clamped into the end (5) of the hollow stem.

3. A nut according to claim 2, characterised in that the closure element seals the hollow stem (2) off from the internal screwthread (4) in airtight manner.

4. A nut according to claim 2 or 3, characterised in that the closure member is a ball (7).

5. A nut according to any of claims 2 to 4, characterised in that the closure member is received in a non-screwthreaded recess (6) at the end (5) of the hollow stem.

6. A nut according to any one at claims 1 to 3, characterised in that the closure element (7) at the end (5) of the hollow stem is a thin deformable or piercable closure member.

7. A nut according to claim 6, characterised in that the closure element (7) is a thin metal member.

8. A nut according to claim 6, characterised in that the closure element is made of a plastics foil.

9. A nut according to claim 1, characterised in that the closure element (7) is an unscrewable screwthreaded member.

4

Fig.1

Fig.2

Fig. 3